(19) Europäisches Patentamt European Patent Office Office européen des brevets

(11) **EP 1 620 497 B1**

(12) **EUROPÄISCHE PATENTSCHRIFT**

(45) Veröffentlichungstag und Bekanntmachung des Hinweises auf die Patenterteilung:
**11.02.2009 Patentblatt 2009/07**

(21) Anmeldenummer: **04727644.9**

(22) Anmeldetag: **15.04.2004**

(51) Int Cl.:
*C08J 7/04* (2006.01)      *C23C 16/02* (2006.01)
*C23C 14/02* (2006.01)

(86) Internationale Anmeldenummer:
**PCT/IB2004/050459**

(87) Internationale Veröffentlichungsnummer:
**WO 2004/092256 (28.10.2004 Gazette 2004/44)**

(54) **GEGENSTAND MIT EINEM SCHICHTENVERBUND**

OBJECT WITH A STRATIFIED COMPOSITE MATERIAL

OBJET AVEC UN MATERIAU COMPOSITE STRATIFIE

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.04.2003 DE 10317795
09.01.2004 DE 102004001613**

(43) Veröffentlichungstag der Anmeldung:
**01.02.2006 Patentblatt 2006/05**

(73) Patentinhaber: **AHC Oberflächentechnik GmbH & Co. OHG
50171 Kerpen (DE)**

(72) Erfinder: **SAUER, Hartmut
57234 Wilnsdorf (DE)**

(74) Vertreter: **Dunkelberg, Oliver Thomas Michael et al
Patentanwälte
Postfach 31 01 12
47254 Duisburg (DE)**

(56) Entgegenhaltungen:
**DE-A- 2 844 425          DE-A- 19 729 891**

**Beschreibung**

Die vorliegende Erfindung betrifft einen Gegenstand mit einem Schichtenverbund, bestehend aus einem Polymer und einer darauf befindlichen metallischen Schicht.

Solche Gegenstände sind bekannt und werden insbesondere im dekorativen Bereich verwendet, wie z.B. verchromte Gegenstände aus ABS (Acryl/Butadien/Styrol-Kunststoffe) oder Polymerblends, insbesondere Zierleisten, Duschköpfe, Kühlergrill von Automobilen, Kaffeekannen.

Solche Verbundwerkstoffe weisen keine nennenswerten Haftfestigkeiten auf, so dass - unabhängig von den dekorativen Eigenschaften - solche Gegenstände keine technischen Funktionen im Sinne von Verschleißschutz, Korrosionsschutz, Versteifung, mechanischer, thermischer und/oder chemischer Beanspruchung übernehmen können.

In jüngster Vergangenheit hat es Überlegungen gegeben, Verbundwerkstoffe oder Oberflächen aus solchen Verbundwerkstoffen mit solchen Funktionen zu entwickeln.

Ein Verfahren zur Herstellung solcher Schichten ist das thermische Spritzen. Hierbei werden metallische Partikel erwärmt und auf das zu beschichtende Substrat beschleunigt. Hierdurch können metallische Schichten auf Kunststoffen herstellt werden. Mit diesem Verfahren lassen sich jedoch ausschließlich geometrisch einfache Bauteile beschichten. Die wesentlichen Nachteile bei diesem Verfahren sind darüber hinaus, dass die Schichten eine hohe Porösität, hohe Eigenspannung, hohe Schichtstärken und unzureichende Haftung für mechanisch hoch belastete Bauteile aufweisen.

Eine weitere Möglichkeit zur Herstellung solcher Verbundwerkstoffe ist das Aufdampfen von Metall auf Kunststoff in einem Vakuum (CVD/PVD-Verfahren). Hiermit werden geschlossene metallische Beschichtungen auf nichtmetallische Substrate, wie beispielsweise Kunststoffe, aufgebracht. Dieses Verfahren ist aber für Bauteile mit größeren Abmessungen wirtschaftlich ungeeignet. Weiterhin werden Bauteile mit Vertiefungen oder Hohlräumen nicht vollständig metallisiert. Die auf diese Weise hergestellten Gegenstände haben eine Metallschicht mit einer Dicke von höchstens 3 $\mu$m, was für viele technische Anwendung nicht ausreichend ist. Des weiteren haben diese Verbundschichten nur eine sehr geringe Haftfestigkeit.

Ein weit verbreitetes Anwendungsgebiet dieser Aufdampf-Technik ist die Beschichtung von Kunststofffolien, zum Beispiel für die Lebensmittelverpackung. So offenbart die DE 198 49 661 A1, eine spezielle Polyesterfolie mit Aluminium zu bedampfen, so dass sie eine hohe Sauerstoffbarriere, einen guten Glanz und einen geringen Reibungskoeffizienten aufweist. Die dort angegebenen Haftfestigkeiten von bis zu 3 N/mm sind jedoch zu gering, um in einer mechanisch beanspruchten, funktionellen Anwendung der metallisierten Folie bestehen zu können.

In der DE 43 12 926 A1 wird ein Verfahren zur Verbesserung der Haftfestigkeit von dentalen Metall-Kunststoff-Verbundschichten beschrieben. Dazu wird ein metallisches Substrat, auf dem bereits ein Polymer aufgebracht ist, mit einem speziellen Te-$CO_2$-Laser bestrahlt. Gegebenenfalls wird zusätzlich ein Haftvermittler verwendet. Eine Metallisierung von Kunststoffsubstraten wird hier nicht beschrieben.

Auch die DE 42 11 712 A1 beschreibt eine Bestrahlung der Oberfläche eines Substrates zur Verbesserung der Haftfestigkeiten mit einem Eximer-Laser. Eine PET (Polyethylenterephthalat)-Folie wird dabei mit diesem speziellen Laser bestrahlt, um anschließend mit einer ferromagnetischen Metallschicht in Rahmen eines PVD-Verfahrens bedampft zu werden. Solche Folien finden unter anderem als Audio- oder Videoaufzeichnungsmedium Verwendung.

Für spezielle Kunststoffe gibt es darüber hinaus ein Verfahren, bei dem die zu beschichtenden Gegenstände zunächst mit geeigneten Substanzen gequollen und anschließend chemisch geätzt werden. Die erzielten Haftfestigkeiten der aufgebrachten Metallschicht auf dem Kunststoff liegen bei maximal 2 N/mm$^2$. Ein wesentlicher Nachteil bei diesem Verfahren ist die erhebliche Umweltbelastung durch die beiden chemischen Behandlungsmittel, so dass dieses Verfahren aus umweltpolitischen Gesichtpunkten nicht mehr lange angewandt werden kann.

Ein weiterentwickeltes Verfahren zur Metallisierung von Polyamiden, das auf dem oben beschriebenen Prinzip des Quellen der Oberfläche des Kunststoffsubstrats beruht aber kein Beizen mit Chromschwefelsäure vorsieht, wird in einem Artikel von G.D. Wolf und F. Fünger "Metallisierte Polyamid-Spritzgußteile", Kunststoffe, 1989, S. 442-447, vorgestellt. Die Oberfläche des amorphen Polyamids wird mit einer metallorganischen Aktivator-Lösung behandelt. Es schließt sich ein herkömmlicher Abscheidungsprozess einer chemisch Nickelschicht an.

Nachteilig an dieser Art der Oberflächenbehandlung, die auf einer chemischen Reaktion der Behandlungslösung mit dem Substrat beruht, ist, dass die gequollenen Oberflächen sehr empfindlich gegen Umwelteinflüsse, wie zum Beispiel Staubeinlagerungen, sind. Des weiteren muss das zu behandelnde Polyamid amorph sein, da teilkristalline oder kristalline Polyamide von der vorgestellten Methode nicht angegriffen werden. Damit stellt diese Methode ein aufwendiges und nur begrenzt einsetzbares Verfahren dar, um haftfeste Verbundschichten zwischen polymeren Substrat und Metallschicht zu erreichen.

Ferner ist aus der Dissertation von H. Sauer, Siegen 1999, bekannt, Verbundwerkstoffe aus einem Kunststoff und einer darauf befindlichen Metallschicht herzustellen, wobei vor dem Aufbringen der metallischen Schicht die Kunststoffoberfläche unter Verwendung eines Strahlmittels aufgerauht und danach mit einer speziellen Ethanol/Calciumcarbonatsuspension behandelt wird.

Solche Verbundwerkstoffe weisen eine außerordentlich hohe Haftfestigkeit der Metallschicht auf dem Kunststoffsubstrat auf.

Allerdings sind mit dem dort beschriebenen Verfahren keine größeren Flächen im industriellen Maßstab herstellbar. Darüber hinaus haben die so erhältlichen Schichten den Nachteil, dass geringe Mengen an Calciumcarbonat in der Grenzschicht zwischen Kunststoffsubstrat und Metallschicht verbleiben, so dass eine "Sollbruchstelle" entsteht. Diese "Sollbruchstelle" führt dazu, dass die Haftfestigkeit an verschiedenen Stellen eines Gegenstandes recht unterschiedlich ist. Diese Abweichungen führen dazu, dass die Stellen mit den geringsten Haftfestigkeiten bei mechanisch sehr hoch beanspruchten Gegenständen frühzeitig zu Defekten führen.

Aus der DE 197 29 891 A1 ist ein Gegenstand mit einem Schichtenverbund bekannt, der eine erste nichtmetallische Schicht und eine darauf aufgebrachte zweite metallische Schicht aufweist. Darin sind auch kohlenstofffaserverstärkte Kunststoffe, glasfaserverstärkte Kunststoffe, Polypropylene und andere als zu beschichtende Substrate genannt. Die dort beschriebenen Gegenstände können als Walzen für die Papierindustrie, Bauteile für Turbomolekularpumpen, Bauteile für die Elektronikindustrie und beschichtete Polyamidrohre Verwendung finden. Nachteilig bei den Gegenständen der DE 197 29 891 ist, dass dort zwar hohe Haftfestigkeiten erzielt werden, diese aber deutliche Unterschiedliche Gleichmäßigkeiten der Haftfestigkeiten aufweisen.

Aufgabe der vorliegenden Erfindung ist die Bereitstellung eines Gegenstandes, der mechanisch extrem belastbar ist und dessen Oberfläche ganz oder teilweise einen Verbundwerkstoff, bestehend aus mindestens einem Polymer und einer Metallschicht, aufweist, der die zuvor geschilderten Nachteile des Standes der Technik überwindet.

Die Aufgabe wird erfindungsgemäß gelöst durch einen Gegenstand mit einem Schichtenverbund, aufweisend eine erste nichtmetallische Schicht und eine darauf aufgebrachte zweite metallische Schicht, wobei die erste nichtmetallische Schicht mindestens ein Polymer enthält, die zwischen nichtmetallischer und metallischer Schicht befindliche Grenze eine Rauhigkeit mit einem $R_a$-Wert von höchstens 5 $\mu$m aufweist und die metallische Schicht eine Haftfestigkeit von mindestens 12 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist.

Der Gegenstand kann - je nach eingesetztem polymerhaltigen Werkstoff - durch sogenannte Rapid-Prototyping Verfahren, insbesondere durch Stereolithographie oder durch Lasersintern, hergestellt werden. Dadurch sind in kurzer Zeit komplexe Formen darstellbar, die gleichmäßig mit der außenstromlos abgeschiedenen metallischen Schicht konturgenau überzogen sind, ohne dass Verstärkungen im Kantenbereich oder Abschwächungen im Bereich von Vertiefungen oder Hinterschneidungen zu beobachten sind.

In einer weiteren Ausführungsform ist ein erfindungsgemäßer Gegenstand bevorzugt, dessen Oberfläche ganz oder teilweise einen Verbundwerkstoff aufweist, wobei dieser Verbundwerkstoff eine erste nichtmetallische Schicht und eine darauf aufgebrachte zweite metallische Schicht aufweist und wobei

a) die Oberfläche des Gegenstands vor Aufbringen der metallischen Schicht nicht chemisch vorbehandelt wird; und

b) die metallische Schicht nicht durch thermisches Spritzen, CVD, PVD oder Laserbehandlung aufgebracht wird;

Unter chemischer Vorbehandlung wird hier und im Folgenden als Abgrenzung zu mechanischen Behandlungen jede Behandlung einer Substratoberfläche verstanden, die durch Beizen, Ätzen, Quellen, Bedampfen, Plasma-Behandlung, Laserbehandlung oder ähnliche Methoden durchgeführt wird und bei der eine Veränderung der Oberflächen durch eine chemische Reaktion hervorgerufen wird.

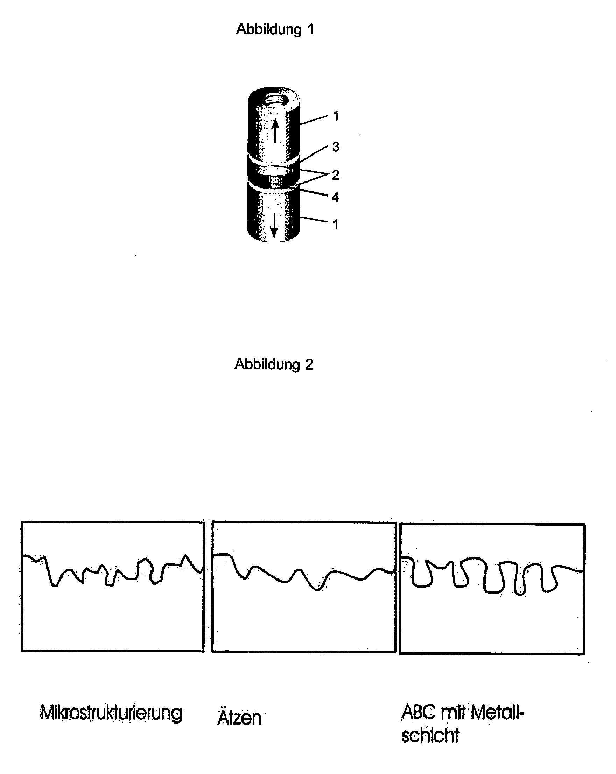

Die Gegenstände gemäß der vorliegenden Erfindung weisen im Gegensatz zu den nach chemischer Vorbehandlung metallisierten Gegenständen des Standes der Technik eine raue, scharfkantige Grenzschicht zwischen der nichtmetallischen Schicht und der außenstromlos aufgebrachten metallischen Schicht auf. Diese scharfkantigen Ausbuchtungen und Hinterschneidungen der Grenzschicht sind als kantige Oberflächenkonturen beispielsweise in einer Querschliffanalyse deutlich erkennbar, deren Ausführung nachfolgend beschrieben wird. So sind sie von den eher runden, aber jedenfalls abgerundeten, Konturen zu unterscheiden, die durch eine chemische Vorbehandlung entstehen (Abbildung 2).

Zur Bestimmung der Rauhigkeitswerte $R_a$ und der Haftfestigkeit wird aus einem erfindungsgemäßen Gegenstand eine Probe entnommen und es wird ein Querschliff gemäß der nachfolgend angeführten Methode angefertigt.

Bei der Querschliffanfertigung besteht die besondere Schwierigkeit, dass die Grenzfläche zwischen Substrat und Oberfläche durch die Bearbeitung sehr schnell zerstört oder abgelöst werden kann. Um dies zu vermeiden, wird bei jeder Querschliffanfertigung eine neue Trennscheibe der Firma Struer Typ 33TRE DSA Nr. 2493 verwendet. Darüber hinaus muss darauf geachtet werden, dass der Anpressdruck, der von der Trennscheibe auf die Substratbeschichtung übertragen wird, so gerichtet ist, dass die Kraft von der Beschichtung aus in Richtung Substrat verläuft. Bei der Trennung ist darauf zu achten, dass der Anpressdruck so gering wie möglich gehalten wird.

Die zu untersuchende Probe wird in eine transparente Einbettmasse (Epofixkitt, erhältlich von der Firma Struer) gegeben. Die eingebettete Probe wird an einer Tischschleifmaschine der Firma Struer, Typ KNUTH-ROTOR-2 geschliffen. Dabei werden verschiedene Schleifpapiere mit Siliziumcarbid und unterschiedlichen Körnungen verwendet. Die genaue Reihenfolge ist wie folgt:

|  | Körnung | Zeit |
|---|---|---|
| 1. Schleifbehandlung | P800 | ca. 1 min |
| 2. Schleifbehandlung | P1200 | ca. 1 min |
| 3. Schleifbehandlung | P2400 | ca. 30 sec |
| 4. Schleifbehandlung | P 4000 | ca. 30 sec |

Während des Schleifvorgangs wird Wasser eingesetzt, um die Schleifpartikel abzutransportieren. Die Tangentialkraft, die am Querschnitt auftritt und durch Reibung entsteht, wird so gerichtet, dass die metallische Schicht gegen das nichtmetallische Substrat gedrückt wird. So wird wirksam verhindert, dass sich die metallische Schicht sich beim Schleifvorgang von dem nichtmetallischen Substrat ablöst.

Anschließend wird die so behandelte Probe mit einem motorbetriebenen Präparationsgerät des Typs DAP-A der Firma Struer poliert. Dabei wird nicht der übliche Probenbeweger verwendet, vielmehr wird die Probe ausschließlich von Hand poliert. Je nach zu polierendem Substrat wird eine Drehzahl zwischen 40 bis 60 U/min und eine Anpresskraft zwischen 5 und 10 N angewandt.

Der Querschliff wird anschließend einer REM-Aufnahme unterzogen. Für die Bestimmung der Grenzlinienvergrößerung wird die Grenzlinie der Schicht zwischen nichtmetallischem Substrat und metallischer Oberfläche bei 10.000-facher Vergrößerung bestimmt. Zur Auswertung wird das Programm OPTIMAS der Firma Wilhelm Mikroelektronik verwendet. Als Ergebnis werden X-Y-Wertepaare ermittelt, die die Grenzlinie zwischen Substrat und Schicht beschreiben. Zur Bestimmung der Grenzlinienvergrößerung im Sinne der vorliegenden Erfindung ist eine Strecke von mindestens 100 $\mu$m erforderlich. Dabei ist der Verlauf der Grenzlinie mit mindestens 10 Messpunkten pro $\mu$m zu bestimmen. Die Grenzlinienvergrößerung bestimmt sich aus dem Quotienten von wahrer Länge durch geometrische Länge. Die geometrische Länge entspricht dem Abstand der Messstrecke, das heißt zwischen dem ersten und letzten Messpunkt. Die wahre Länge ist die Länge der Linie, die durch alle aufgenommenen Messpunkte verläuft.

Der Oberflächenrauheitswert $R_a$ bestimmt sich nach der Norm DIN 4768/ISO 4287/1 ebenfalls unter der Verwendung der zuvor aufgenommenen X-Y-Wertepaare.

Der $R_a$-Wert ist ein messtechnisch reproduzierbares Maß für die Rauhigkeit von Oberflächen, wobei Profil-Ausreißer (d.h. extreme Täler oder Hügel) durch die Flächenintegration weitgehend unberücksichtigt bleiben.

Die Haftfestigkeiten (angegeben in N/mm$^2$) der erfindungsgemäßen Verbundwerkstoffe werden ausschließlich anhand des Stirnzugversuchs nach DIN 50160 bestimmt:

Der Stirnzugversuch (senkrechter Zugtest) nach DIN 50160 wird seit Jahren zur Prüfung von Halbleitern, der Bestimmung der Haft-Zugfestigkeit thermisch gespritzter Schichten und bei verschiedenen Beschichtungstechnologien eingesetzt.

Für die Bestimmung der Haftfestigkeit im Stirnzugversuch wird der zu prüfende Schicht/Substrat-Verbund zwischen zwei Prüfstempeln verklebt und unter einachsiger zügiger Kraft bis zum Bruch belastet (vgl. Abbildung 1). Ist die Haftfähigkeit des Klebstoffs größer als die der Beschichtung und erfolgt der Bruch zwischen Schicht und Substrat, so kann nach Gleichung

$$\sigma_{H\ exp} = \frac{F_{max}}{A_G}$$

(mit $\sigma_{H\ exp}$: experimentell erfassbare Haftfestigkeit, $F_{max}$: Maximalkraft beim Bruch des Verbundes und $A_G$: geometrische Bruchfläche) die Haftfestigkeit berechnet werden.

Bei den Grundwerkstoffen des Standes der Technik, die eine metallische Schicht auf einer mikrostrukturierten Kunststoffoberfläche halten, sind durch das Herstellungsverfahren bedingt Spuren aus Kalziumcarbonat nachweisbar. Diese Verunreinigungen werden durch die erforderliche Vorbehandlung mittels einer Suspension aus Ethanol und Kalziumcarbonat eingebracht. Eine mögliche Erklärung für die verbesserte Gleichmäßigkeit der Haftfestigkeit bei den Gegenständen gemäß der vorliegenden Erfindung kann darin gesehen werden, dass der verbleibende Anteil an Fremdbestandteilen so verringert ist, dass er nicht mehr als Trennmittel oder auch Trennschicht zwischen Kunststoffoberfläche und metallischer Schicht wirkt.

Die Bestimmung des Anteils an Kalzium in der Grenzfläche erfolgt mittels EDX- Spektroskopie.

Beispiel für einen solchen erfindungsgemäßen Gegenstand sind Pumpengehäuse und entsprechende Läufer (Pumpenrad) von Kraftstoffpumpen für die Automobilindustrie. Bei diesen Gegenständen handelt es sich um solche aus Thermoplasten, insbesondere aus Polyoxymethylen (POM) und Polyphenylensulfid (PPS). Besonders bevorzugt wird das Phenolharz PF verwendet. Nach der zuvor beschriebenen Vorbehandlung werden diese Kraftstoffpumpenteile außenstromlos mit einer Chemisch-Nickelschicht in einer Dicke von 5 $\mu$m überzogen. Die entsprechenden, erfindungsgemäßen Gegenstände zeichnen sich durch einen besonders hohen Korrosions- und Verschleißschutz aus. Die Standzeiten der so hergestellten Gegenstände sind - verglichen mit denen des Standes der Technik - um den Faktor 100 erhöht.

In einer bevorzugten Ausführungsform der vorliegenden Erfindung weist die Grenzschicht zwischen nichtmetallischer Schicht und metallischer Schicht neben einem Ra-Wert von höchstens 5 μm und einer Haftfestigkeit von mindestens 12 N/mm$^2$ bei einer Standardabweichung der Haftfestigkeit sechs verschiedener, über die Oberfläche des Schichtenverbundes verteilten Messwerte von höchstens 25% des arithmetischen Mittelwertes außerdem eine Rauhigkeit mit einem $R_z$-Wert von höchstens 35 μm auf.

Der $R_z$-Wert ist ein Maß für die durchschnittliche vertikale Oberflächenzerklüftung.

Die oben beschriebenen Werte für die Rauhigkeit ($R_a$- und $R_z$-Wert) und für die Haftfestigkeit werden erzielt, wenn das Polymer der nichtmetallischen.Schicht nicht aus Polypropylen und/oder Polytetrafluorethylen ausgewählt ist.

Folglich werden diese Polymere nicht verwendet, wenn eine Haftfestigkeit von mehr als 6 N/mm$^2$ von ausschlaggebender Bedeutung ist.

Gemäß einer weiteren Ausführungsform der vorliegenden Erfindung enthält das nichtmetallische Substrat mindestens ein faserverstärktes Polymer, insbesondere ein Kohlenstofffaser verstärktes Polymer, und der Durchmesser der Faser beträgt weniger als 10 μm.

Sofern die Verbundwerkstoffe nicht nur thermischen Beanspruchungen unterliegen sondern auch mechanischen werden besonders bevorzugt verstärkte Kunststoffe eingesetzt, insbesondere Kunststofffaser verstärkte Kunststoffe (CFK), Glasfaser verstärkte Kunststoffe (GFK), auch durch Aramitfasern verstärkte Kunststoffe oder Mineralfaser verstärkte Kunststoffe.

Auf diese Weise werden Gegenstände von hoher Steifigkeit bei sehr geringem Gewicht erhalten, die eine ausgezeichnete Haftung der metallischen Schicht zeigen. Dieses Eigenschaftsprofil ist für einen weiten Bereich der technischen Anwendungen interessant, wie zum Beispiel für die Luft- und Raumfahrtindustrie und für die Automobilindustrie.

Die Aufgabe der vorliegenden Erfindung wird gleichermaßen gelöst durch einen Gegenstand mit einem Schichtenverbund, aufweisend eine erste nichtmetallische Schicht und eine darauf aufgebrachte zweite metallische Schicht, wobei die erste nichtmetallische Schicht Polypropylen und/oder Polytetrafluorethylen enthält, die zwischen nichtmetallischer und metallischer Schicht befindliche Grenze eine Rauhigkeit mit einem $R_z$-Wert von höchstens 35 μm und einem $R_a$-Wert von höchstens 5 μm aufweist und die metallische Schicht eine Haftfestigkeit von mindestens 5 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist.

In den Fällen, in denen die nichtmetallische Schicht entweder Polypropylen und/oder Polytetrafluorethylen enthält, werden Haftfestigkeiten von mindestens 5 N/mm$^2$ erzielt. Dies stellt einen ausgezeichneten Wert dar, insbesondere in Verbindung mit der hohen Gleichmäßigkeit der Haftfestigkeit, die bisher nicht erzielt werden konnte.

Somit ist es erstmals möglich, Gegenstände mit einem Schichtenverbund bereitzustellen, die besondere Eigenschaften in bezug auf ihre Benetzbarkeit, ihre Durchlässigkeit für bestimmte Stoffe (Permeabilität) oder auch in Bezug auf ihre Verträglichkeit mit Blut und Blutplasma zeigen. Eine mögliche Anwendung könnten solche Gegenstände aus Polytetrafluorethylen zum Beispiel in der Medizintechnik, als Membrane für Pumpen oder in der Brennstoffzellentechnik finden.

Die Aufgabe der vorliegenden Erfindung wird auch gelöst durch einen Gegenstand mit einem Schichtenverbund, aufweisend eine erste nichtmetallische Schicht und eine darauf aufgebrachte zweite metallische Schicht, wobei die erste nichtmetallische Schicht mindestens ein faserverstärktes Polymer, insbesondere ein Glasfaser verstärktes Polymer, enthält, der Durchmesser der Faser mehr als 10 μm beträgt, die zwischen nichtmetallischer und metallischer Schicht befindliche Grenze eine Rauhigkeit mit einem $R_a$-Wert von höchstens 10 μm aufweist und die metallische Schicht eine Haftfestigkeit von mindestens 12 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist.

Mit der Bereitstellung dieser Gegenstände wird eine hohe Steifigkeit der resultierenden Bauteile bei geringem Gewicht erzielt, die aufgrund ihrer geringen Kosten für den industriellen Einsatz interessant sind. Insbesondere Glasfaser verstärkte Polymere als Bestandteil der nichtmetallischen Schicht, die Fasern mit einem Durchmesser größer als 10 μm aufweisen, sind sehr preiswert und gut zu verarbeiten. Der Faserdurchmesser hat einen großen Einfluss auf die Rauhigkeitswerte, so dass bei solchen Werkstoffen gemäß der vorliegenden Erfindung ein Rauhigkeitswert Ra von höchstens 10 μm erzielt wird. Gleichzeitig ist es erfindungsgemäß möglich, ausgezeichnete Werte für die Haftfestigkeit zu erzielen. Darüber hinaus weisen die erfindungsgemäßen Gegenstände eine hohe Gleichmäßigkeit der Haftung auf. Dies ermöglicht erstmals, die Lebensdauer für das beanspruchte Bauteil deutlich zu erhöhen. Denn bereits eine lokale Delamination des Schichtenverbundes führt zu einem Versagen des gesamten Bauteils. Besonders gravierend ist der Vorteil bei Bauteilen mit einer durch den Schichtenverbund bedeckten Oberfläche von mehr als 10 dm$^2$, also bei großen Bauteilen bzw. Bauteilen mit einer großen Oberfläche.

In einer weiteren Ausführungsform weist der vorstehend beschriebene Gegenstand eine Grenze zwischen nichtmetallischer Schicht und metallischer Schicht auf, die eine Rauhigkeit mit einem $R_z$-Wert von höch-

stens 100 $\mu$m aufweist.

Gerade für den Einsatz von faserverstärkten Polymeren, deren Faserstärke mehr als 10 $\mu$m beträgt, ist es wichtig, möglichst geringe $R_z$-Werte zu erzielen. Bei dieser Kombination ist es überraschenderweise möglich, hohe Haftfestigkeiten bei - im Verhältnis den verwendeten großen Faserdurchmessern - geringen $R_z$-Werten zu erzielen.

Gemäß einer bevorzugten Ausführungsform ist die erste nichtmetallische Schicht zugleich die Oberfläche des Gegenstands. Bevorzugt basieren diese Oberflächen auf einem polymeren Werkstoff. Als besonders bevorzugt sind faserverstärkte Kunststoffe, Thermoplasten und andere, industriell verwendete Polymere zu nennen.

Gleichermaßen ist es aber auch möglich, Gegenstände zu verwenden, deren erste nichtmetallische Schicht nicht die Oberfläche des Gegenstands ist. So kann der Gegenstand aus einem metallischen oder keramischen Werkstoff bestehen, der mit einer ersten, nichtmetallischen Schicht überzogen ist, die mindestens ein Polymer enthält. Beispiele für solche Substrate sind lackierte Bauteile (z.B. EX-Schutz für lackierte Gegenstände) und anodisierte oder hartanodisierte Aluminiumbauteile mit einer auf der Konversionsschicht befindlichen Polymerschicht.

Besonders bevorzugt sind erfindungsgemäße Ausführungsformen, die eine Standardabweichung der Haftfestigkeit sechs verschiedener, über die Oberfläche des Schichtenverbundes verteilten Messwerte von höchstens 15 %, insbesondere höchstens 10 %, des arithmetischen Mittelwerts aufweisen.

Auf diese Weise ist eine noch höhere mechanische Beanspruchbarkeit der resultierenden Bauteile gewährleistet.

Das Polymer der nichtmetallischen Schicht wird bevorzugt ausgewählt aus der Gruppe von Polyamid, Polyethylen, Polyvinylchlorid, Polystyrol, Epoxidharzen, Polyetheretherketon, Polyoxymethylen, Polyformaldehyd, Polyacetal, Polyurethan, Polyetherimid, Polyphenylsulfon, Polyphenylensulfid, Polyarylamid, Polycarbonat und Polyimid.

Gemäß einer weiteren, ebenfalls bevorzugten Ausführungsform der vorliegenden Erfindung ist die metallische Schicht eine außenstromlos abgeschiedene Metallschicht, Metalllegierung oder Metalldispersionsschicht.

Auf diese Weisen können erstmals Gegenstände mit einem Schichtenverbund bereitgestellt werden, die eine ausgezeichnete Haftung der metallischen Schicht auf der nichtmetallischen Schicht aufweisen. Auch die Gleichmäßigkeit der Haftung der metallischen Schicht spielt eine wesentliche Rolle für die Eignung dieser Gegenstände als stark beanspruchte Bauteile für industrielle Maschinen. Eine gezielte Auswahl des nichtmetallischen Substrates und der darauf befindlichen metallischen Schicht ermöglicht eine exakte Anpassung des Eigenschaftsprofils an die Bedingungen des Einsatzgebietes. So ist es zum Beispiel wichtig, bei CFK-Walzen, die in einer Länge zwischen 1.000 und 12.000 mm verwendet werden, mit einer über die gesamte Länge konstanten Linienlast eine genau definierte Haftfestigkeit einzustellen, damit die Walze den Anforderungen für die gesamte Lebensdauer standhält.

Besonders bevorzugt wird auf die nichtmetallische Schicht des erfindungsgemäßen Gegenstands als außenstromlos abgeschiedene Metallschicht eine Kupfer-, Nickel- oder Goldschicht aufgebracht.

Es kann aber auch eine außenstromlos abgeschiedene Metalldispersionsschicht aufgebracht werden, bevorzugt eine Kupfer-, Nickel- oder Goldschicht mit eingelagerten nichtmetallischen Partikeln. Dabei können die nichtmetallischen Partikel eine Härte von mehr als 1.500 HV aufweisen und ausgewählt sein aus der Gruppe von Siliziumcarbid, Korund, Diamant und Tetraborcarbid.

Diese Dispersionsschichten weisen somit neben den zuvor beschriebenen Eigenschaften weitere Funktionen auf, beispielsweise kann die Verschleißbeständigkeit, Oberflächenbenetzung oder Notlaufeigenschaft der erfindungsgemäßen Gegenstände verbessert werden.

Ebenfalls bevorzugt können die nichtmetallischen Partikel reibungsvermindernde Eigenschaften aufweisen und ausgewählt sein aus der Gruppe von Polytetrafluorethylen, Molybdänsulfid, kubisches Bornitrid und Zinnsulfid.

In einer weiteren, besonders bevorzugten Ausführungsform der vorliegenden Erfindung ist auf der außenstromlos abgeschiedenen metallischen Schicht des erfindungsgemäßen Gegenstands eine Schicht aus Aluminium, Titan oder deren Legierungen aufgebracht, deren Oberfläche anodisch oxidiert oder keramisiert ist.

Solche auf anodischem Wege oxidierten oder keramisierten Schichten aus Aluminium, Titan oder deren Legierungen sind auf metallischen Gegenständen bekannt und werden beispielsweise unter der Bezeichnung Hart-Coat® oder Kepla-Coat® von der Firma AHC Oberflächentechnik GmbH & Co. OHG vertrieben. Diese Schichten zeichnen sich durch eine besonders hohe Härte und einen hohen Betriebswiderstand und über mechanischen Beanspruchungen.

Zwischen der außenstromlos abgeschiedenen metallischen Schicht des erfindungsgemäßen Gegenstands und der Schicht aus Aluminium, Titan oder deren Legierungen können noch eine oder mehrere weitere metallische Schichten angeordnet sein.

Die weiteren, zwischen der stromlos abgeschiedenen Schicht und der Aluminiumschicht angeordneten metallischen Schichten sind je nach Einsatzzweck ausgewählt. Auswahl solcher Zwischenschichten ist dem Fachmann gut bekannt und beispielsweise in dem Buch "Die AHC-Oberfläche - Handbuch für Konstruktion und Fertigung" 4. erweiterte Auflage 1999 beschrieben.

Ebenso ist es möglich, dass die Oberfläche eines solchen Gegenstands eine durch Fremdioneneinlagerung schwarz gefärbte, keramische Oxidschicht aus Aluminium, Titan oder deren Legierungen ist.

Die durch Fremdionen schwarz gefärbte keramische Oxidschicht aus Aluminium, Titan oder deren Legierungen ist für hochwertige optische Elemente von besonderem Interesse, insbesondere in der Luft- und Raumfahrtindustrie.

Die Herstellung von durch Fremdioneneinlagerung schwarz gefärbten keramischen Oxidschichten ist beispielsweise in der US-A-5035781 oder US-A-5075178 beschrieben. Die Erzeugung von Oxidkeramikschichten auf Aluminium oder Titan ist beispielsweise in der EP 0 545 230 B1 beschrieben. Die Herstellung von anodisch erzeugten Oxidschichten auf Aluminium ist beispielweise in der EP 0 112 439 B1 beschrieben.

Die Gegenstände der vorliegenden Erfindung werden besonders bevorzugt mit Hilfe eines speziellen Verfahrens erhalten, das die folgenden Schritte umfasst:

i. die Oberfläche der nichtmetallischen Schicht wird vor Aufbringen der metallischen Schicht nicht chemisch vorbehandelt;
ii. die Oberfläche der nichtmetallischen Schicht wird in einem ersten Schritt mittels eines Strahlmittels mikrostrukturiert;
iii. die metallische Schicht wird anschließend durch außenstromlose Metallabscheidung aufgebracht.

Die Gegenstände gemäß der vorliegenden Erfindung weisen als Schichtenverbund zunächst eine erste nichtmetallisches Schicht auf, die mindestens ein Polymer enthält. Zur Herstellung des Schichtenverbundes gemäß der Erfindung wird die Oberfläche der nichtmetallischen Schicht in einem ersten Schritt mittels einer Strahlbehandlung mikrostrukturiert. Das verwendete Verfahren ist zum Beispiel in der DE 197 29 891 A1 beschrieben. Als Strahlmittel werden besonders verschleißbeständige, anorganische Partikel verwendet. Bevorzugt handelt es um Kupfer-Aluminiumoxid oder Siliziumcarbid. Dabei hat es sich als vorteilhaft erwiesen, dass das Strahlmittel eine Partikelgröße zwischen 30 und 300 $\mu$m aufweist. Dort ist weiterhin beschrieben, dass auf die so aufgerauhten Oberflächen eine Metallschicht aufgebracht werden kann mittels einer außenstromlosen Metallabscheidung.

Wie bereits die Verfahrensbezeichnung aussagt, wird bei der außenstromlosen Metallabscheidung während des Beschichtungsprozesses keine elektrische Energie von außen zugeführt sondern die Metallschicht wird ausschließlich durch eine chemische Relation abgeschieden. Die Metallisierung von nichtleitenden Kunststoffen in einer chemisch reduktiv arbeitenden Metallsalzlösung benötigt einen Katalysator an der Oberfläche, um an diesem das metastabile Gleichgewicht des Metallreduktionsbades zu stören und an der Oberfläche des Katalysators Metall abzuscheiden. Dieser Katalysator besteht aus Edelmetallkeimen wie Palladium, Silber, Gold und vereinzelt Kupfer, die auf der Kunststoffoberfläche aus einem Aktivatorbad angelagert werden. Bevorzugt wird, verfahrenstechnisch begründet, jedoch eine Aktivierung mit Palladiumkeimen.

Im wesentlichen erfolgt die Aktivierung der Substratoberfläche in zwei Schritten. In einem ersten Schritt wird das Bauteil in eine kolloidale Lösung (Aktivatorbad) eingetaucht. Dabei werden die für eine Metallisierung notwendigen, bereits in der Aktivatorlösung vorhandenen Palladiumkeime an der Kunststoffoberfläche adsorbiert. Nach der Bekeimung wird durch Spülen in einer alkalischen, wäßrigen Lösung (Konditionierung) das sich beim Eintauchen in die kolloidalen Lösung zusätzlich gebildete Zinn-II- bzw. Zinn-IV-Oxidhydrat aufgelöst und dadurch der Palladiumkeim freigelegt. Nach dem Spülen kann mit chemischen Reduktionsbädern vernickelt oder verkupfert werden.

Dies erfolgt in einem durch einen Stabilisator im metastabilen Gleichgewicht gehaltenen Bad, welches sowohl das Metallsalz als auch das Reduktionsmittel enthält. Die Bäder für die Nickel- bzw. Kupferabscheidung haben die Eigenschaft, die in ihnen gelösten Metallionen an den Keimen zu reduzieren und elementares Nickel oder Kupfer abzuscheiden. Im Beschichtungsbad müssen sich die beiden Reaktionspartner den Edelmetallkeimen an der Kunststoffoberfläche nähern. Durch die hierdurch stattfindende Redoxreaktion entsteht die Leitschicht, wobei die Edelmetallkeime dabei die Elektronen des Reduktionsmittels aufnehmen und sie bei Annäherung eines Metallions wieder abgeben. Bei dieser Reaktion wird Wasserstoff freigesetzt. Nachdem die Palladiumkeime mit Nickel bzw. Kupfer überzogen wurden, übernimmt die aufgebrachte Schicht die katalytische Wirkung. Dies bedeutet, dass die Schicht von den Palladiumkeimen aus zusammenwächst, bis sie völlig geschlossen ist.

Exemplarisch wird an dieser Stelle auf die Abscheidung von Nickel eingegangen. Beim Beschichten mit Nickel wird die bekeimte und konditionierte Kunststoffoberfläche in ein Nickelmetallsalzbad eingetaucht, welches in einem Temperaturbereich zwischen 82°C und 94°C eine chemische Reaktion zulässt. Der Elektrolyt ist im allgemeinen eine schwache Säure mit einem pH-Wert, der zwischen 4,4 und 4,9 liegt.

Die aufgebrachten dünnen Nickelüberzüge können mit einer elektrolytisch abgeschiedenen Metallschicht verstärkt werden. Eine Beschichtung von Bauteilen mit Schichtendicken >25 $\mu$m ist aufgrund der niedrigen Abscheidungsgeschwindigkeit chemischer Beschichtungsprozesse nicht wirtschaftlich. Weiterhin können mit den chemischen Beschichtungsprozessen nur wenige Beschichtungswerkstoffe abgeschieden werden, so dass es vorteilhaft ist, für weitere technisch wichtige Schichtwerkstoffe auf elektrolytische Verfahren zurückzugreifen. Ein weiterer wesentlicher Punkt sind die unterschiedlichen Eigenschaften chemisch und elektrolytisch abgeschiedener Schichten bei Schichtstärken > 25 $\mu$m, beispielsweise Einebnung, Härte und Glanz. Die Grundlagen der elektrolytischen Metallabscheidung sind in B. Gaida, "Einführung in die Galvanotechnik", E.G. Leuze-Verlag, Saulgau, 1988 oder in H. Simon, M. Thoma, "Angewandte Oberflächentechnik für metallische Werkstoffe", C. Hanser-Verlag, München (1985) beschrieben.

Kunststoffteile, die durch einen außenstromlosen Beschichtungsprozess eine elektrisch leitende Schicht aufweisen, unterscheiden sich hinsichtlich der elektrolytischen Metallisierung nur unwesentlich von denen der Metalle. Trotzdem sollten einige Punkte bei der elektrolytischen Metallisierung von metallisierten Kunststoffen nicht außer acht gelassen werden. Aufgrund der meist geringen Leitschichtstärke muss die Stromdichte zu Beginn der elektrolytischen Abscheidung reduziert werden. Wird dieser Punkt nicht beachtet, kann es zum Ablösen und zum Verbrennen der Leitschicht kommen. Ferner sollte darauf geachtet werden, dass störende Anlaufschichten mit speziell dafür geeigneten Dekapierbädern entfernt werden. Weiterhin können Eigenspannungen zum Zerstören der Schicht führen. Bei der Abscheidung von Nickelschichten aus einem ammoniakalischen Bad können beispielsweise Zugspannungen in der Größenordnung von 400 bis 500 MPa auftreten. Durch Zusätze, wie Saccharin und Butindiol, kann eine Veränderung der Struktur der Nickelüberzüge in Form einer veränderten Korngröße und Bildung von Mikrodeformationen den Abbau von inneren Spannungen begünstigen, was sich auf ein mögliches vorzeitiges Versagen bei der Beschichtung positiv auswirken kann.

Beispiele für außenstromlos aufgebrachte Metallschichten sind in dem Handbuch der Firma AHC Oberflächentechnik ausführlich beschrieben ("Die AHC-Oberfläche" Handbuch für Konstruktion und Fertigung, 4. Auflage, 1999).

Auf der metallischen Schicht können zusätzlich noch eine oder mehrere Schichten, insbesondere metallische, keramische sowie vernetzte oder gehärtete Polymerschichten angeordnet sein.

So ist es zum Beispiel möglich, auf einer außenstromlos abgeschiedenen Nickelschicht als metallische Schicht der vorliegenden Erfindung eine weitere, elektrolytisch abgeschiedene Nickelschicht aufzubringen und darauf eine Chromschicht abzuscheiden. Die so erhaltenen Oberflächen können auf Walzen aufgebracht werden, die eine hohe Oberflächengüte und eine hohe mechanische Belastbarkeit aufweisen müssen. Die elektrolytische Abscheidung der zweiten Nickelschicht wird vorgenommen, um größere Schichtdicken kostengünstig herstellen zu können.

Des weiteren können die Gegenstände der vorliegenden Erfindung als metallische Schicht eine Kupferschicht aufweisen, auf die anschließend eine Zinn- oder eine weitere Kupferschicht aufgebracht werden kann. Anschließend wird zum Beispiel eine Goldschicht auf die bereits vorhandenen Metallschichten appliziert. Solche Beschichtungen können ihre Anwendung zum Beispiel zur EMV-Abschirmung elektronischer Bauteile oder zur Verbesserung der thermischen Leitfähigkeit der beschichteten Gegenstände finden.

Auch können die Gegenstände gemäß der vorliegenden Erfindung eine Nickelschicht als metallische Schicht aufweisen, auf die eine weitere Nickelschicht aufgebracht wird. Auf diese Weise ist es möglich, eine hohe Steifigkeit der resultierenden Kunststoffteile zu erreichen und so eine Anwendung für mechanisch stark beanspruchte Komponenten wie beispielsweise für Zahnräder, Aufhängungen oder Gehäuseteile zu gewährleisten. Ferner kann als metallische Schicht auf einem Gegenstand gemäß der vorliegenden Erfindung eine Kupferschicht vorliegen, die mit einer Nickelschicht und anschließend mit einer Chromschicht überzogen sein kann. Eine mögliche Anwendung eines solchen Gegenstandes besteht darin, als schnell positionierbarer Spiegel in Kopierern und in der Lasertechnik eingesetzt zu werden.

In einem weiteren Anwendungsbeispiel der vorliegenden Erfindung kann auf eine außenstromlos abgeschiedenen Nickelschicht ein Epoxyharz aufgebracht werden. Die Oberfläche dieses Epoxyharzes wird anschließend erneut mit einer Nickelschicht überzogen. Auf diese Weise können gegenüber Kohlenwasserstoffen auch unter hohem Druck diffusionsbeständige Bauteile für die petrochemische Industrie hergestellt werden, wie zum Beispiel Rohre und Gehäuse zur vollständigen Aufnahme von Pumpen.

Eine besonders industriell bevorzugte Ausführungsform sind Filtergehäuse für Hochfrequenz-Komponenten in der Telekommunikationsindustrie, insbesondere für die Sendemasteneinheit auf dem Mobilfunksektor. Hierbei handelt es sich um Gegenstände aus PPS/PEI, deren gesamte Oberfläche zuerst mit einer chemisch, außenstromlos aufgebrachten Nickel/Phosphor-Legierung in einer Schichtdicke von 6 $\mu$m und anschließend mit einer elektrolytisch aufgebrachten Silberschicht in einer Dicke von 6 $\mu$m überzogen wird. Bisher wurde solche Gegenstände aus Aluminium gefertigt, dann vernickelt und schließlich versilbert. Diese Gegenstände des Standes der Technik weisen erhebliche Korrosionsprobleme auf, insbesondere in abgasbelasteten Ballungsgebieten. Bisher mussten diese Filtergehäuse alle 6 Monate ausgetauscht werden. Mit dem erfindungsgemäßen Gegenstand kann die Einsatzdauer im Gegensatz dazu auf mehr als 2 Jahre erhöht werden.

Des weiteren können diese weiteren metallischen Schichten, die auf die bereits vorhandene metallische Schicht des erfindungsgemäßen Gegenstands aufgebracht werden, nicht nur elektrolytisch sondern auch mit Hilfe anderer Verfahren wie CVD/PVD oder thermischem Spritzen auf einen Gegenstand mit einer metallischen Schicht der vorliegenden Erfindung appliziert werden. Auf diese Weise ist es möglich, Aluminium oder Edelstahl auf einen Gegenstand aufzubringen, der zum Beispiel aus Kunststoff besteht und mit einer Nickelschicht gemäß der vorliegenden Erfindung versehen ist.

Ein weiteres interessantes Beispiel für einen erfindungsgemäßen Gegenstand ist ein Kunststoff, der zunächst mit einer außenstromlos aufgebrachten Nickelschicht versehen ist. Auf diese Nickelschicht werden anschließend nacheinander Schichten von Silber und Gold elektrolytisch aufgetragen. Eine solche, eher spezielle, Schichtenabfolge findet in der Medizintechnik Anwendung bei Bauteilen für diagnostische Geräte.

Insgesamt zeigen die oben angeführten Beispiele, dass die erfindungsgemäßen Gegenstände in einem sehr großen Bereich technischer Anwendungen eingesetzt werden können.

Ein Gegenstand gemäß der vorliegenden Erfindung kann beispielsweise eine Walze für die Bahnwaren verarbeitende Industrie (Folien, Papier, Textilien, Druckereien), ein Bauteil von Turbomolekularpumpen (Ring für die Verdichter-Stufe), Griff für Haushaltsgeräte (Töpfe, Deckel), Komponente für die Luftfahrtindustrie (Griff, Handlauf) und die Raumfahrtindustrie (Sonnensegel), Bauteil für die Elektronikindustrie (Kondensator, Schallfeldkondensator, Schallreiter, Mikrowellenhohlleiter, Schalterfläche, Antenne, Antennengehäuse), Bauteil für die bewegten Bauteile von Zyklonen, Windsichter, mechanisch, thermisch und/oder chemisch beanspruchtes Bauteil für die Automobilindustrie (Bremskolben für Automobile) oder eine Form oder Komponente für die Spritzgussindustrie darstellen.

**Beispiel (erfindungsgemäß)**

Eine Platte aus Polyamid-6 mit den Abmessungen 200 * 100 * 12 mm mit einer Ausgangsrauhigkeit von Ra= 0,64 $\mu$m und Rz = 7,5 $\mu$m wurde oberflächenbehandelt:

Die Oberflächenvorbehandlung wird mit einer modifizierten Druckstrahlanlage der Fa. Straaltechnik International vorgenommen. Die Strahlanlage wird mit einem Druck von 4 bar betrieben. Als Strahldüse wird eine Borcarbiddüse mit einem Durchmesser von 8 mm eingesetzt. Die Strahldauer beträgt 4,6 s. Als Strahlmittel wird SiC der Körnung P80 mit einem mittleren Korndurchmesser von 200 bis 300 $\mu$m verwendet.

Um das Strahlsystem speziell an die Anforderungen der Kunststoffmodifikation hinsichtlich reproduzierbarer Oberflächentopographien anzupassen, wurden 2 Druckkreisläufe installiert, je einer für den Transport des Strahlmittels und den eigentlichen Beschleunigungsvorgang. Diese Modifikation ergab einen sehr konstanten Volumenstrom und einen großen Druckbereich.

Ein Druckluftstrom transportiert das Strahlmittel mit einem möglichst geringen Druck zur Düse. Die Strömungsverhältnisse gewährleisten, verursacht durch einen hohen Volumenstrom des Strahlmittels und einen geringen Anteil an Druckluft, einen geringen Verschleiß der Anlage und des Strahlmittels. Erst am Ende des Transportschlauches vor der Mischdüse wird der Querschnitt reduziert, um den gewünschten Volumenstrom einzustellen. Bei allen Kunststoffvorbehandlungen wurde ein konstanter Volumenstrom von 1 l/min vorgegeben. Im zweiten Teil des Systems strömt bis zur Düse Druckluft (Volumenstrom 1), die sich in einem Druckbereich von 0,2-7 bar stufenlos einstellen lässt. Das Strahlmittel, welches mit einer sehr kleinen Strömungsgeschwindigkeit in die Mischdüse gefördert wird, wird dann durch die hohe Strömungsgeschwindigkeit des Druckluftstroms beschleunigt.

Die so aufgeraute Platte wir in ein Ultraschallbad mit einem Gemisch aus entionisiertem Wasser und 3 Vol.-% Butylglykol fünf Minuten lang behandelt.

Die für die Metallabscheidung der Leitschicht verwendeten Badreihen basieren auf der bekannten kolloidalen Palladiumaktivierung in Verbindung mit einer abschließenden katalysierten Metallreduktion. Alle hierfür benötigten Badreihen wurden von der Fa. Max Schlötter bezogen. Die vom Hersteller angegeben Tauchreihenfolgen, Behandlungszeiten und -temperaturen wurden bei allen Prozeßschritten der Nickelabscheidung eingehalten:

(1) Aktivatorvortauchlösung:

Dient zur Vermeidung der Einschleppung von Verunreinigungen und zur vollständigen Benetzung der Probe vor dem eigentlichen Aktivieren der Oberfläche.
Tauchzeit: 2 min, Raumtemperatur

(2) Aktivator GS 510:

Aktivierung der Oberfläche mit Zinn/Palladium-Kolloid.
Tauchzeit: 4 min, Raumtemperatur

(3) Spülbäder: entionisiertes Wasser

Vermeidung der Einschleppung von Aktivator GS 510-Bestandteilen durch Spülen in entionisiertem Wasser.
Tauchzeit: 1 min, Raumtemperatur

(4) Conditioner 101:

Konditionierung der Werkstoffoberfläche durch Ablösen störender Zinnverbindungen von der Oberfläche.
Tauchzeit: 6 min, Raumtemperatur

(5) Spülbäder: entionisiertes Wasser.

Tauchzeit: 1 min, Raumtemperatur

(6a) Chemisches Nickelbad SH 490 LS:

Metallisieren der Kunststoffe mit einer hellen, halbglänzenden amorphen Schicht bei einer Abscheidetemperatur von 88-92°C.
Tauchzeit: 10 Minuten

Bei der gewählten Tauchzeit im Nickelbad ergab sich eine Schichtstärke von 1,4 $\mu$m. Diese Stärke der Nickelschicht reicht für eine elektrolytische Beschichtung aus.

Sämtliche Prozeßschritte, die zur Abscheidung der Leitschicht nötig waren, erfolgten in 50 l fassenden Kunststoffwanne, wobei bei der Nickelabscheidung durch eine zusätzliche Heizplatte mit Temperaturregelung eine Badtemperatur von 90° $\pm$ 0,5°C während des gesamten Beschichtungszyklus eingehalten wurde. Um eine gleichmäßige und reproduzierbare Schichtqualität zu erhalten, wurden die Badreihen nach einem Durchsatz von 20 Proben nach Angaben der Fa. Max Schlötter analysiert und ergänzt.

Nachdem die Nickelleitschicht chemisch aufgebracht war, wurden die Probe von ca. 90°C auf ca. 60°C in destilliertem Wasser abgekühlt, um dann bei 55°C elektrolytisch mit Nickel weiterbeschichtet zu werden. Dieser Zwischenschritt diente dazu, das Entstehen von Reaktionsschichten zu vermeiden und durch rasches Abkühlen hervorgerufene Eigenspannungen auszuschließen. Die Proben, die ausschließlich mit einer Nickelleitschicht beschichtet wurden, kühlten in einem destillierten Wasserbad langsam bis auf 25°C ab.

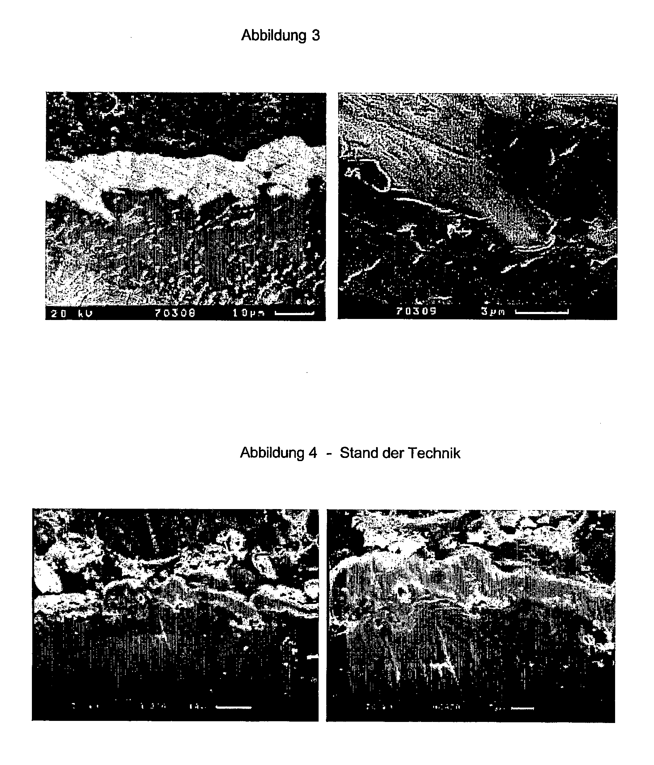

Die Querschliffuntersuchung durch REM (1.500-fach und 3.000-fach) sind in den folgenden Abbildungen (Abbildung 3) wiedergegeben.

Die Auswertung der EDX-Analyse ergab eine Restmenge an Calcium von 0,03 Gew.-%.

Die Ergebnisse der Haftfestigkeitsuntersuchungen sind in Tabelle 1 dargestellt.

**Tabelle 1**

| Nr. | Haftfestigkeit |
|---|---|
| 1 | 20,5 N/mm$^2$ |
| 2 | 19,5 N/mm$^2$ |
| 3 | 13,4 N/mm$^2$ |
| 4 | 16,4 N/mm$^2$ |
| 5 | 22,3 N/mm$^2$ |
| 6 | 20,3 N/mm$^2$ |
| 7 | 16,8 N/mm$^2$ |
| 8 | 14,5 N/mm$^2$ |
| 9 | 13,2 N/mm$^2$ |
| 10 | 12,9 N/mm$^2$ |
| 11 | 16,7 N/mm$^2$ |
| 12 | 24,5 N/mm$^2$ |
| 13 | 18,4 N/mm$^2$ |
| 14 | 19,2 N/mm$^2$ |
| 15 | 15,4 N/mm$^2$ |
| 16 | 22,9 N/mm$^2$ |
| 17 | 16,7 N/mm$^2$ |
| 18 | 17,3 N/mm$^2$ |

(fortgesetzt)

| Nr. | Haftfestigkeit |
|---|---|
| 19 | 12,8 N/mm$^2$ |
| 20 | 14,5 N/mm$^2$ |
| 21 | 18,2 N/mm$^2$ |
| 2 | 19,7 N/mm$^2$ |
| 23 | 23,4 N/mm$^2$ |
| 24 | 18,9 N/mm$^2$ |
| 25 | 20,1 N/mm$^2$ |
| 26 | 21,4 N/mm$^2$ |
| | |
| Standardabweichung | 3,4 N/mm$^2$ |
| Mittelwert | 18,1 N/mm$^2$ |
| Variationskoeffizient | 19 % |

**Vergleichsbeispiel (nicht erfindungsgemäß)**

Das erfindungsgemäße Beispiel wird wiederholt, jedoch wird nach der Strahlbehandlung die Platte in einem Ultraschallbad in einer Suspension von 5 Gew.-% CaCO$_3$ in 96% Ethanol 5 Minuten lang behandelt. Anschließend wird die Platte in einem weiteren Ultraschallbad mit reinen, 96-%igem Ethanol für weitere fünf Minuten lang behandelt.

Die Querschliffuntersuchung durch REM (1.500-fach und 3.000-fach) sind in den folgenden Abbildungen (Abbildung 4) wiedergegeben.

Die Auswertung der EDX-Analyse ergab eine Restmenge an Calcium von 0,91 Gew.-%, die aus der Behandlung der CaCO$_3$ / Ethanol-Suspension stammt.

Die Ergebnisse der Haftfestigkeitsuntersuchungen sind in Tabelle 2 dargestellt.

**Tabelle 2**

| Nr. | Haftfestigkeit |
|---|---|
| 1 | 9,9 N/mm$^2$ |
| 2 | 19,1 N/mm$^2$ |
| 3 | 10,1 N/mm$^2$ |
| 4 | 13,1 N/mm$^2$ |
| 5 | 16,6 N/mm$^2$ |
| 6 | 10,3 N/mm$^2$ |
| 7 | 19,8 N/mm$^2$ |
| 8 | 13,3 N/mm$^2$ |
| 9 | 21,4 N/mm$^2$ |
| 10 | 10,9 N/mm$^2$ |
| 11 | 20,0 N/mm$^2$ |

(fortgesetzt)

| Nr. | Haftfestigkeit |
|---|---|
| 12 | 10,9 N/mm$^2$ |
| 13 | 11,7 N/mm$^2$ |
| 14 | 13,0 N/mm$^2$ |
| 15 | 16,4 N/mm$^2$ |
| 16 | 14,1 N/mm$^2$ |
| 17 | 15,4 N/mm$^2$ |
| 18 | 10,5 N/mm$^2$ |
| 19 | 15,8 N/mm$^2$ |
| 20 | 16,7 N/mm$^2$ |
| 21 | 8,5 N/mm$^2$ |
| 22 | 17,2 N/mm$^2$ |
| 23 | 7,0 N/mm$^2$ |
| 24 | 18,2 N/mm$^2$ |
| 25 | 7,2 N/mm$^2$ |
| 26 | 19,4 N/mm$^2$ |
| | |
| Standardabweichung | 4,2 N/mm$^2$ |
| Mittelwert | 14,1 N/mm$^2$ |
| Variationskoeffizient | 29,8% |

Die Ergebnisse zeigen deutlich einen signifikanten Unterschied in der Standardabweichung der Haftfestigkeit der verschiedenen, über die Oberfläche des Verbundwerkstoffes verteilten Messwerte.
Dieser Unterschied bewirkt beispielsweise bei der Herstellung von Walzen für die Druckereiindustrie, dass Walzen mit einem Varianzkoeffizienten von mehr als 25 % bei der notwendigen Nachbehandlung durch Schleifen lokale Ablösungen der Metallschicht von dem aufgerauhten Kunststoffsubstrat zeigen, die auf geringere Haftfestigkeiten zurückzuführen sind.

Vergleichbare Walzen entsprechend der vorliegenden Erfindung zeigen keine Ablösungen während des Schleifvorganges.

Bezugszeichenliste Abbildung 1:

(1)     Zugstempel
(2)     Kleber
(3)     Metallschicht
(4)     Substrat

**Patentansprüche**

1. Gegenstand mit einem Schichtenverbund, aufweisend eine erste nichtmetallische Schicht und eine darauf aufgebrachte zweite metallische Schicht, **dadurch gekennzeichnet, dass**

● die erste nichtmetallische Schicht mindestens ein Polymer enthält, dass die zwischen nichtmetallischer und metallischer Schicht befindliche Grenze eine Rauhigkeit mit einem $R_a$-Wert von höchstens 5 $\mu$m aufweist und dass die metallische Schicht eine Haftfestigkeit von mindestens 12 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist; oder

● die erste nichtmetallische Schicht Polypropylen und/oder Polytetrafluorethylen enthält, dass die zwischen nichtmetallischer und metallischer Schicht befindliche Grenze eine Rauhigkeit mit einem $R_z$-Wert von höchstens 35 $\mu$m und einem $R_a$-Wert von höchstens 5 $\mu$m aufweist und dass die metallische Schicht eine Haftfestigkeit von mindestens 5 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist.; oder

● die erste nichtmetallische Schicht mindestens ein faserverstärktes Polymer, insbesondere ein Glasfaser verstärktes Polymer, enthält, dass der Durchmesser der Faser mehr als 10 $\mu$m beträgt, dass die zwischen nichtmetallischer und metallischer Schicht befindliche Grenze eine Rauhigkeit mit einem Ra-Wert von höchstens 10 $\mu$m aufweist und dass die metallische Schicht eine Haftfestigkeit von mindestens 12 N/mm$^2$ und eine Standardabweichung der Haftfestigkeit an sechs verschiedenen, über die Oberfläche des Schichtenverbundes verteilten Messwerte von höchstens 25 % des arithmetischen Mittelwerts aufweist.

2. Gegenstand nach Anspruch 1, dessen Oberfläche ganz oder teilweise einen Verbundwerkstoff aufweist, wobei dieser Verbundwerkstoff eine erste nichtmetallische Schicht und eine darauf aufgebrachte zweite metallische Schicht aufweist, **dadurch gekennzeichnet, dass**

a) die Oberfläche des Gegenstands vor Aufbringen der metallischen Schicht nicht chemisch vorbehandelt wird; und
b) die metallische Schicht nicht durch thermisches Spritzen, CVD, PVD oder Laserbehandlung aufgebracht wird;

3. Gegenstand nach Anspruch 1 oder 2, **dadurch gekennzeichnet, dass** die zwischen nichtmetallischer und metallischer Schicht befindliche Grenze eine Rauhigkeit mit einem Rz-Wert von höchstens 35 μm aufweist.

4. Gegenstand nach Anspruch 1, 2 oder 3, **dadurch gekennzeichnet, dass** das Polymer nicht aus Polypropylen und/oder Polytetrafluorethylen ausgewählt ist.

5. Gegenstand nach einem der vorhergehenden Ansprüche, **dadurch gekennzeichnet, dass** die nichtmetallische Schicht mindestens ein faserverstärktes Polymer, insbesondere ein Kohlenstofffaser verstärktes Polymer, enthält und der Durchmesser der Faser weniger als 10 μm beträgt.

6. Gegenstand nach einem der vorhergehenden Ansprüche, **dadurch gekennzeichnet, dass** die erste nichtmetallische Schicht die Oberfläche des Gegenstands ist.

7. Gegenstand nach einem der Ansprüche 1 bis 5, **dadurch gekennzeichnet, dass** die erste nichtmetallische Schicht nicht die Oberfläche des Gegenstands ist.

8. Gegenstand nach einem der vorhergehenden Ansprüche, **dadurch gekennzeichnet, dass** die Standardabweichung der Haftfestigkeit höchstens 15 %, insbesondere höchstens 10 %, des arithmetischen Mittelwerts beträgt.

9. Gegenstand nach einem der vorhergehenden Ansprüche, **dadurch gekennzeichnet, dass** das Polymer ausgewählt ist aus der Gruppe von Polyamid, Polyethylen, Polyvinylchlorid, Polystyrol, Epoxidharzen, Polyetheretherketon, Polyoxymethylen, Polyformaldehyd, Polyacetal, Polyurethan, Polyetherimid, Polyphenylsulfon, Polyphenylensulfid, Polyarylamid, Polycarbonat und Polyimid.

10. Gegenstand nach einem der vorhergehenden Ansprüche, **dadurch gekennzeichnet, dass** die metallische Schicht eine außenstromlos abgeschiedene Metallschicht, Metalllegierung oder Metalldispersionsschicht ist.

11. Gegenstand nach einem der vorhergehenden Ansprüche, **dadurch gekennzeichnet, dass** die außenstromlos abgeschiedene Metallschicht eine Kupfer-, Nikkel- oder Goldschicht ist.

12. Gegenstand nach einem der vorhergehenden Ansprüche, **dadurch gekennzeichnet, dass** die außenstromlos abgeschiedene Metalldispersionsschicht eine Kupfer-, Nickel- oder Goldschicht mit eingelagerten nichtmetallischen Partikeln ist.

13. Gegenstand nach Anspruch 12, **dadurch gekennzeichnet, dass** die nichtmetallischen Partikel eine Härte von mehr als 1.500 HV aufweisen und ausgewählt sind aus der Gruppe von Siliziumcarbid, Korund, Diamant und Tetraborcarbid.

14. Gegenstand nach Anspruch 12 oder 13, **dadurch gekennzeichnet, dass** die nichtmetallischen Partikel reibungsvermindernde Eigenschaften aufweisen und ausgewählt aus der Gruppe von Polytetrafluorethylen, Molybdänsulfid, kubisches Bornitrid und Zinnsulfid.

15. Gegenstand nach einem der vorhergehenden Ansprüche, **dadurch gekennzeichnet, dass** auf der außenstromlos abgeschiedenen metallischen Schicht eine Schicht aus Aluminium, Titan oder deren Legierungen aufgebracht ist, deren Oberfläche anodisch oxidiert oder keramisiert ist.

16. Gegenstand nach Anspruch 15, **dadurch gekennzeichnet, dass** zwischen der außenstromlos abgeschiedenen metallischen Schicht und der Schicht aus Aluminium, Titan oder deren Legierungen noch eine oder mehrere metallische Schichten angeordnet sind.

17. Gegenstand nach Anspruch 15 oder 16, **dadurch gekennzeichnet, dass** die Oberfläche des Gegenstands eine durch Fremdioneneinlagerung schwarz gefärbte, keramische Oxidschicht aus Aluminium, Titan oder deren Legierungen ist.

18. Verfahren zur Herstellung eines Gegenstands nach Anspruch 1, umfassend folgende Schritte:

i. die Oberfläche der nichtmetallischen Schicht wird vor Aufbringen der metallischen Schicht nicht chemisch vorbehandelt;
ii. die Oberfläche der nichtmetallischen Schicht wird in einem ersten Schritt mittels eines Strahlmittels mikrostrukturiert;
iii. die metallische Schicht wird anschließend durch außenstromlose Metallabscheidung aufgebracht.

19. Verwendung eines Gegenstands nach einem der Ansprüche 1 bis 27 als Walze für die Bahnwaren verarbeitende Industrie (Folien, Papier, Textilien, Druckereien), Bauteil von Turbomolekularpumpen (Ring für die Verdichter-Stufe), Griff für Haushaltsgeräte (Töpfe, Dekkel), Komponente für die Luftfahrtindustrie (Griff, Handlauf) und die Raumfahrtindustrie (Sonnensegel), Bauteil für die Elektronikindustrie (Kondensator, Schallfeldkondensator, Schallreiter, Mikrowellenhohlleiter, Schalterfläche, Antenne, Antennengehäuse), Bauteil für die bewegten Bauteile von Zyklonen, Windsichter, mechanisch, thermisch und/oder chemisch beanspruchtes

23 **EP 1 620 497 B1** 24

Bauteil für die Automobilindustrie (Bremskolben für Automobile) oder als Form oder Komponente für die Spritzgussindustrie.

## Claims

1. Article with a layer composite exhibiting a first non-metallic layer and a second metallic layer applied thereon **characterised in that**

   ● the first non-metallic layer contains at least one polymer, that the boundary present between the non-metallic and the metallic layer exhibits a roughness with an $R_a$ value of maximum 5 $\mu$m and that the metallic layer exhibits an adhesive strength of at least 12 N/mm$^2$ and a standard deviation of the adhesive strength at six different measured value points distributed over the surface of the layer composite of maximum 25 % of the arithmetic mean; or
   ● the first non-metallic layer contains polypropylene and/or polytetrafluorethylene, that the boundary present between the non-metallic and the metallic layer exhibits a roughness with an $R_2$ value of maximum 35 $\mu$m and an $R_a$ value of maximum 5 $\mu$m and that the metallic layer exhibits an adhesive strength of at least 5 N/mm$^2$ and a standard deviation of the adhesive strength at six different measured value points distributed over the surface of the layer composite of maximum 25 % of the arithmetic mean; or
   ● the first non-metallic layer contains at least one fibre-reinforced polymer in particular one glass-fibre reinforced polymer, that the diameter of the fibre is more than 10 $\mu$m and that the boundary present between the non-metallic and the metallic layer exhibits a roughness with an $R_a$ value of maximum 10 $\mu$m and that the metallic layer exhibits an adhesive strength of at least 12 N/mm$^2$ and a standard deviation of the adhesive strength at six different measured value points distributed over the surface of the layer composite of maximum 25 % of the arithmetic mean.

2. Article according to claim 1 whose surface exhibits a composite material in full or in parts, this composite material exhibiting a first non-metallic layer and a second metallic layer applied thereon **characterised in that**

   a) the surface of the article is not chemically pretreated before the application of the metallic layer; and
   b) the metallic layer is not applied by thermal spraying, CVD, PVD or laser treatment.

3. Article according to claim 1 or 2 **characterised in that** the boundary between the non-metallic and the metallic layer exhibits a roughness with an $R_z$ value of maximum 35 $\mu$m.

4. Article according to claim 1, 2 or 3 **characterised in that** the polymer has not been selected from polypropylene and/or polytetrafluoroethylene.

5. Article according to one of the preceding claims **characterised in that** the non-metallic layer contains at least one fibre-reinforced polymer, in particular a polymer reinforced with carbon fibre and the diameter of the fibre is less than 10 $\mu$m.

6. Article according to one of the preceding claims **characterised in that** the first non-metallic layer is the surface of the article.

7. Article according to one of the claims 1 to 5 **characterised in that** the first non-metallic layer is not the surface of the article.

8. Article according to one of the preceding claims **characterised in that** the standard deviation of the adhesive strength amounts to maximum 15 %, in particular maximum 10 % of the arithmetic mean.

9. Article according to one of the preceding claims **characterised in that** the polymer is selected from the group of polyamide, polyethylene, polyvinyl chloride, polystyrene, epoxy resin, polyether ether ketone, polyoxymethylene, polyformaldehyde, polyacetal, polyurethane, polyether imide, polyphenyl sulphone, polyphenylene sulphide, polyarylamide, polycarbonate and polyimide.

10. Article according to one of the preceding claims **characterised in that** the metallic layer without external current is a metal layer, metal alloy or metal dispersion layer.

11. Article according to one of the preceding claims **characterised in that** the metal layer without external current is a copper, nickel or gold layer.

12. Article according to one of preceding claims **characterised in that** the metal layer without external current is a copper, nickel or gold layer with embedded non-metallic particles.

13. Article according to claim 12 **characterised in that** the non-metallic particles exhibit a hardness of more than 1,500 HV and are selected from the group of silicon carbide, corundum, diamond and tetraboric carbide.

14. Article according to claims 12 or 13 **characterised**

13

**in that** the non-metallic particles exhibit friction-reducing properties and are selected from the group of polytetrafluoroethylene, molybdenum sulphide, cubic boron nitride and tin sulphide.

15. Article according to one of the preceding claims **characterised in that**, onto the metallic layer deposited without external current, a layer of aluminium, titanium or alloys is applied whose surface is anodically oxidised or ceramics-treated.

16. Article according to claim 15 **characterised in that** one or several metallic layers are also arranged between the metallic layer deposited without external current and the layer of aluminium, titanium or their alloys.

17. Article according to claim 15 or 16 **characterised in that** the surface of the article is a ceramic oxide layer of aluminium, titanium or their alloys, which layer is coloured black by foreign ion embedments.

18. Process for the production of an article according to claim 1 comprising the following steps:

   i. the surface of the non-metallic layer is not chemically pretreated before applying the metallic layer;
   ii. the surface of the non-metallic layer is microstructured in a first step by a blasting agent;
   iii. the metallic layer is subsequently applied by metal deposition without external current.

19. Use of an article according to one of claims 1 to 27 as roller for the sheet product processing industry (films, paper, textiles, printing), a structural part of turbomolecular pumps (ring for the compressor stage), handle for household equipment (saucepans, lids), components for the aeroplane industry (handle, handrail) and the space industry (sun sails), structural part for the electronics industry (condenser, sonic field condenser, sonic rider, microwave hollow-cored conductor, switcher face, antenna, antenna housing), structural part for the moveable structural parts of cyclones, wind sifters, structural parts subject to mechanical, thermal and/or chemical stresses for the motor vehicle industry (brake pistons for motor vehicles) or as a mould or component for the injection moulding industry.

**Revendications**

1. Objet avec une couche compound présentant une première couche non-métallique et une deuxième couche métallique appliquée sur la première couche **caractérisé en ce que**:

   ● la première couche non-métallique contient au moins un polymère, la limite entre la couche non-métallique et métallique présente une rugosité avec une valeur de $R_a$ d'au moins de 5 $\mu$m et que la couche métallique présente une résistance d'adhérence d'au moins de 12 N/mm$^2$ et présente un écart type de la résistance d'adhérence mesuré aux six différents points diffusés sur la surface de la couche compound au maximum de 25 % de la moyenne arithmétique; ou
   ● la première couche non-métallique contient du polypropylène et/ou du polytétrafluoréthylène, la limite entre la couche non-métallique et métallique présente une rugosité avec une valeur de $R_z$ au maximum de 35 $\mu$m et une valeur de $R_a$ au maximum de 5 $\mu$m et que la couche métallique présente une résistance d'adhérence d'au moins de 5 N/mm$^2$ et présente un écart type de la résistance d'adhérence mesuré aux six différents points diffusés sur la surface de la couche compound au maximum de 25 % de la moyenne arithmétique; ou
   ● la première couche non-métallique contient au moins un polymère renforcé de fibre, notamment un polymère renforcé de fibre optique, que le diamètre de la fibre étant plus de 10 $\mu$m, que la limite entre la couche non-métallique et métallique présente une rugosité avec une valeur de $R_a$ au maximum de 10 $\mu$m, que la couche métallique présente une résistance d'adhérence d'au moins de 12 N/mm$^2$ et présente un écart type de la résistance d'adhérence mesuré aux six différents points diffusés sur la surface de la couche compound au maximum de 25 % de la moyenne arithmétique.

2. Objet selon la revendication 1 dont la surface présente entièrement ou en partie un matériau composite présentant une première couche non-métallique et une deuxième couche métallique appliquée sur la première, objet **caractérisé en ce que**

   a) la surface de l'objet n'est pas prétraitée chimiquement avant l'application de la couche métallique; et
   b) la couche métallique n'est pas appliquée par injection thermique, CVD, PVD ou traitée par laser ;

3. Objet selon la revendication 1 ou 2 **caractérisé par** ce que la limite entre la couche non-métallique et métallique présente une rugosité avec une valeur de $R_z$ au maximum de 35 $\mu$m.

4. Objet selon la revendication 1, 2 ou 3 **caractérisé par** ce que le polymère n'est pas sélectionné du polypropylylène et/ou du polytétrafluoréthylène.

**5.** Objet selon l'une des revendications précédentes **caractérisé par** ce que la couche non-métallique contient au moins un polymère renforcé de fibre, notamment un polymère renforcé de fibre optique, le diamètre de la fibre étant moins de 10 μm.

**6.** Objet selon l'une des revendications précédentes **caractérisé par** ce que la première couche non-métallique est la surface de l'objet.

**7.** Objet selon l'une des revendications 1 au 5 **caractérisé par** ce que la première couche non-métallique n'est pas la surface de l'objet.

**8.** Objet selon l'une des revendications précédentes **caractérisé par** ce que l'écart type de la résistance d'adhérence étant au maximum de 15 %, notamment au maximum de 10 % de la moyenne arithmétique.

**9.** Objet selon l'une des revendications précédentes **caractérisé par** ce que le polymère est choisi du groupe du polyamide, du polyéthylène, du chlorure de polyvinyle, du polystyrène, de la résine époxyde, du polyétheréthercétone, du polyoxyméthylène, du polyformaldéhyde, du polyacétal, du polyuréthane, du polyétherimide, du polyphénylesulfone, du polyphénylesulfure, du polyarylamide et du polyimide.

**10.** Objet selon l'une des revendications précédentes **caractérisé par** ce que la couche métallique étant une couche métallique, un alliage métallique ou une couche métallique de dispersion sans courant extérieur.

**11.** Objet selon l'une des revendications précédentes **caractérisé par** ce que la couche métallique sans courant extérieur est une couche de cuivre, une couche de nickel ou une couche d'or.

**12.** Objet selon l'une des revendications précédentes **caractérisé par** ce que la couche métallique de dispersion sans courant extérieur est une couche de cuivre, une couche de nickel ou une couche d'or avec des particules non-métalliques entreposées.

**13.** Objet selon la revendication 12 **caractérisé par** ce que les particules non-métalliques présentes une dureté de plus de 1.500 HV et que celles-ci sont choisies du groupe du carbure de silicium, du corindom, du diamant et du tétraborcarbide.

**14.** Objet selon la revendication 12 ou 13 **caractérisé par** ce que les particules non-métalliques présentes des propriétés de friction réduisante et que celles-ci sont choisies du groupe du polytétrafluoréthylène, du molybdènesulfure, du nitrure de bore cubique et du sulfure d'étain.

**15.** Objet selon l'une des revendications précédentes **caractérisés par** ce que sur la couche métallique sans courant extérieur une couche d'aluminium, du titan ou ses alliages est appliquée dont la surface est oxydée ou céramisée par anodisation.

**16.** Objet selon la revendication 15 **caractérisé par** ce qu' une couche métallique ou d'autres est arrangée entre la couche métallique sans courant extérieur et la couche d'aluminium, du titan ou ses alliages.

**17.** Objet selon la revendication 15 ou 16 **caractérisé par** ce que la surface de l'objet est une couche d'oxyde céramique et colorée noir par dispersion d'ions extérieurs, cette couche d'oxyde étant d'aluminium, du titan ou ses alliages.

**18.** Processus pour produire un objet selon la revendication 1 comprenant des mesures suivantes :

  i. la surface de la couche non-métallique n'est pas prétraitée chimiquement avant l'application de la couche métallique;
  ii. dans un premier pas la surface de la couche non-métallique sera micro-structurée à l'aide d'un agent de grenaillage
  iii. ensuite la couche métallique sera appliquée à l'aide d'une séparation métallique sans courant extérieur

**19.** Application d'un objet selon l'une des revendications 1 à 27 comme cylindre pour l'industrie de traitement de produit de feuilles (feuilles, papier, textile, imprimeries), élément de construction des pompes turbo-moléculaire (bague de stade de compresseur), poignée pour des appareils ménager (pots, couvercles), composante pour l'industrie aéronautique (poignée, main courante) et pour l'industrie astronautique (taud de soleil), élément de construction pour l'industrie électronique (condensateur, condensateur de champ sonore, cavalier de sonore, guide de micro-ondes, surface d'interrupteur, antenne, cage d'antenne), élément de construction pour les éléments mouvés de construction de cyclones, séparateur d'air, élément de construction sollicité mécaniquement, thermiquement et/ou chimiquement pour l'industrie automobile (pistons du frein pour des automobiles) ou en tant que du forme ou du composant pour l'industrie de moulage par injection.

Abbildung 1

Abbildung 2

Mikrostrukturierung    Ätzen    ABC mit Metallschicht

Abbildung 3

Abbildung 4 - Stand der Technik

**EP 1 620 497 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19849661 A1
- DE 4312926 A1
- DE 4211712 A1
- DE 19729891 A1
- DE 19729891
- US 5035781 A
- US 5075178 A
- EP 0545230 B1
- EP 0112439 B1

**In der Beschreibung aufgeführte Nicht-Patentliteratur**

- **G.D. WOLF ; F. FÜNGER.** Metallisierte Polyamid-Spritzgußteile. *Kunststoffe,* 1989, 442-447
- **B. GAIDA.** Einführung in die Galvanotechnik. E.G. Leuze-Verlag, 1988
- **H. SIMON ; M. THOMA.** Angewandte Oberflächentechnik für metallische Werkstoffe. C. Hanser-Verlag, 1985
- Die AHC-Oberfläche. *Handbuch für Konstruktion und Fertigung,* 1999, vol. 4